# EUROPEAN PATENT APPLICATION

(11) **EP 3 372 396 A1**
(43) Date of publication of application: **12.09.2018**
(21) Application number: 17382112.5
(22) Date of filing: 06.03.2017
(51) Int. Cl.: B29D 99/00, B29C 70/30, B29C 70/22, B29C 70/20, B29L 31/30

(54) **A CURVED COMPOSITE PART AND METHOD FOR MANUFACTURING THEREOF**

(71) Applicant: Airbus Operations, S.L., 28906 Getafe (Madrid) (ES)
(72) Inventor: AREVALO RODRIGUEZ, Elena, 28906 GETAFE (Madrid) (ES); TORAL VAZQUEZ, Javier, 28906 GETAFE (Madrid) (ES); VAZQUEZ CASTRO, Javier, 28906 GETAFE (Madrid) (ES); GARCÍA BLANCO, Maria, Jose, 28906 GETAFE (Madrid) (ES); MONEO PEÑACOBA, Ana, GETAFE (Madrid) 28906 (ES); IGLESIAS LÓPEZ, Marta, 28906 GETAFE (Madrid) (ES); CRUZ DOMÍNGUEZ, Francisco, Jose, 28906 GETAFE (Madrid) (ES); SANCHEZ PEREZ, Melania, 28906 GETAFE (Madrid) (ES); COLÁS GARCIA, Noelia, 28906 GETAFE (Madrid) (ES); PINILLOS MARTINEZ, Ricardo, 28906 GETAFE (Madrid) (ES); CRUZADO PARLA, Gabriel, 28906 GETAFE (Madrid) (ES); MUÑOZ AJENJO, Fernando, 28906 GETAFE (Madrid) (ES); MARTÍN, Julián, 28906 GETAFE (Madrid) (ES); CHAMORRO ALONSO, Francisco, 28906 GETAFE (Madrid) (ES); CUENCA RICON, Jose, 28906 GETAFE (Madrid) (ES)
(74) Representative: Herrero & Asociados, S.L.

(57) **Abstract**

The invention refers to a curved composite part (1) for an aircraft, comprising a composite stack of layers (6), each of the layers (6', 6", 6"', 6"") including reinforcing fibers (7) substantially aligned with at least one direction of a unique Cartesian coordinate reference system (2). Preferably, the layers (6', 6", 6"', 6"") that include fibers (7) whose orientation is secant to the bending line of the inner flange (5) of the part (1) are disposed in overlapping layer segments (8). Preferably, each one of these overlapping layer segments (8) is aligned with the same at least direction of the Cartesian coordinate reference system (2) with which the rest of the fibers (7) of the previous layer have been substantially aligned.

## Description

### Object of the invention

The present invention refers to a curved composite part for being used in the fuselage frames or in any other structural part of an aircraft, such as a beam, a spar, or a rib.

One object of the invention is to provide a new fiber laminate configuration for a curved composite part that improves weight and cost.

Another object of the present invention is to provide a curved composite part suitable for being integrated in structures, such as frames, beams, spars or ribs with any radius of curvature, including also frames with small radius.

Another object of the invention is to provide a fully automated method based on full stack laminate that improves the quality and the recurrent cost savings of a curved composite part.

### Background of the invention

The main structure of a pressurized and un-pressurized fuselage of an aircraft comprises a skin, stringers and frames. The skin is longitudinally stiffened by stringers in order to reduce its thickness and be competitive in weight. Frames prevent the general instability of the fuselage, being adapted to bear local loads.

In addition, in open sections of the fuselage or in highly loaded areas, the structure of the fuselage further comprises structural elements of reinforcement, such as beams, which reinforce and stiffen these areas.

Thus, the most current aircraft fuselage structure used includes, on one hand, skin with integrated stringers (co-bonded or co-cured) and, on the other hand, frames with reinforcing beams. Usually, frames and beams are manufactured separately, and riveted to the fuselage skin with the integrated stringers.

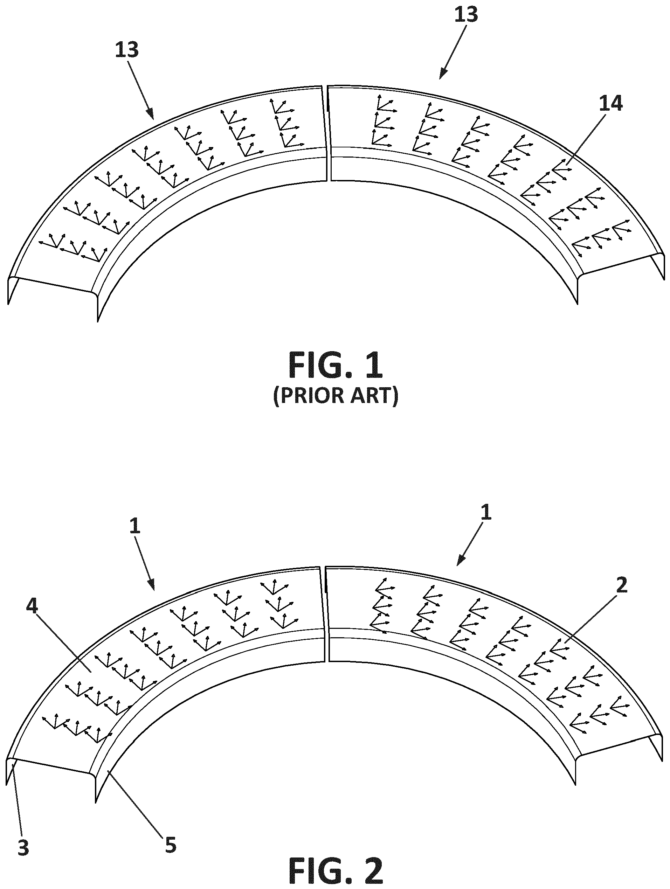

Currently, the laminate configuration for producing curved composite parts is based on determined layer orientation. These parts are made with local Cartesian coordinate reference system, where the origin of layers orientation changes in each position. Figure 1 shows an example of two curved composite parts (13) in which local Cartesian coordinate reference systems (14) have been used.

As an exemplary case, frames are conventionally made up of UD layers formed by the automatic overlay of bi-axial stacks on the web frame and flanges, and the manual addition of 0° reinforcement layers on the flanges.

The process is divided in two phases. In a first one, a Z straight piece is obtained as a result of several forming operations of bi-axial stacks of unidirectional layers. This process is repeated for each bi-axial stack laid-up together to make a Z straight full stack. In a second phase, the full stack is then stretched to form the curvature. Finally, the preform is cured in an autoclave.

The particularity of this process is the stretching operation. The ratio of the radius over the web height is critical. Further, in practice, it is not possible to stretch 0° fibres on both the web and outer flanges, and 0° fibres in the web with width variations. So, continuous 0° layers are only possible in inner flanges but with manual operations. As standardized, a laminate at 0° direction is perpendicular to the cross section of the frame.

This manufacturing process requires a lot of operations from the raw material to obtain the end product. Further, its forming process implies many operations. As a consequence, the lead time and labour time are high.

Thus, this lay-up process is partially automated and due to the local Cartesian reference system it has penalties in terms of time and cost, and curvature limitations (radius around 3m).

Alternatively, frames made up of UD layers may be formed by +45°, -45°, 0°, and 90° orientations, layer by layer.

A machine can be used to obtain multi-axial layers with different orientations. These layers are used with the forming machine, together with 0° layers. The layers are formed directly on the tooling, on a rotary table. Several supply heads allows the use of different orientations. It is also possible to layup 0° fibers in the web and flanges. The rest of the process is a classical bagging and autoclave curing.

This last lay-up process is partially automated (0° layers may require manual operation), so again, due to the local Cartesian reference system it has penalties in terms of time and cost, and curvature limitations.

These two processes with UD layers present similar limitations with respect to the laminate orientations vs curvature, which lead to an increase in costs and labour time.

Thus, current manufacturing processes, in which UD layers are used, are only feasible for parts with a high radius of curvature (around 3m).

On the other hand, frames made up of fabric materials comprises bi-axial layers and unidirectional 0° reinforcements in the inner flange, laid-up together to make a flat full stack. The full stack is then folded to make a C-piece forming the inner and outer flanges and then stretched manually to form the curvature. Sometimes, an intermediate process to consolidate the inner flange can take place. Finally, the preform is cured following the classical RTM or autoclave process (for textiles and prepreg materials respectively).

For this fabric process, for small radius of curvature (radius lower than 500mm), folding involves distortion/deviation problems when the curvature is attempted to copy (known as local rosette). This situation generates knock down factors resulting in an increase of thickness, carrying an increase in weight, manufacturing hours and cost.

Thus, the manufacturing process in which fabric layers are used is the only process suitable for obtaining small radius of curvature (radius lower than 500mm). However, this process is only feasible by using manual operations, which lead to an increase in labour time (cost) and less repeatability. Additionally, because of the limited properties of the fabric, parts designed with fabric materials are heavier than parts designed with UD materials.

Document EP2386483 A2 relates to a curved composite frame and a method of making the same, in which a laminate configuration using a polar coordinate system is disclosed. The frame is thus formed by layers which have been steered following the curvature of frame. This laminate is slow and the frame is thus costly to produce.

Similarly, document EP2185345 A1 relates to a structural frame of a composite material in which a laminate configuration using unidirectional layers steer along the axis of the frame is disclosed. Again, the laminate is slow and the frame is costly.

It would therefore be desirable to provide curved composite parts with any radius of curvature and with a cost, quality and weight improvement. Further, it is desirable to provide technical means for producing these parts in such a way that the manufacturing times and costs are reduced.

### Summary of the invention

The present invention overcomes the above mentioned drawbacks by providing a curved composite part, and a method for manufacturing thereof that reduces manufacturing time and costs, at the same time that provides robust and reliable parts irrespective of its radius of curvature. Further, the invention enlarges the use of unidirectional layers to this kind of parts achieving a reduction in the weight of these parts.

One aspect of the present invention refers to a curved composite part for an aircraft, comprising a composite stack of layers, each of the layers including reinforcing fibers substantially aligned with at least one direction of one and a same (unique) Cartesian coordinate reference system.

Providing curved composite parts with fibers aligned with a unique Cartesian coordinate reference system, the invention allows obtaining robust and cost-effective curved parts, since parts are produced by a full stack lamination. This lamination avoids conventional manual operations and enables one-shot forming processes, reducing the labor time and the production cost of the parts. Further, these composite parts are robust since they have been obtained by one-shot and fully automatic process.

Preferably, the curved composite part has an outer flange, an inner flange, and a web. Further, according to a preferred embodiment of the invention, the part comprises layers including fibers whose orientation is secant to the bending line of the inner flange, wherein said layers comprise overlapping layer segments.

These overlapping layer segments in the inner flange of the part permit obtaining parts with any radius of curvature, also parts with small radius of curvature, such as 300mm - 500mm. Further, these overlapping layer segments improve the manufacturability and the quality of the parts, since they provide extra material that permits stretching layers without suffering fibre distortions when the inner flange is folded, and the curvature of the part is attempted to copy. As a consequence of the fibre distortion prevention, the invention avoids the need to increase the thickness in some of the areas of the part. This way, the invention achieves a reduction in weight in comparison with conventional curved parts with small radius that uses fabric for obtaining parts with small radius of curvature.

According to another preferred embodiment of the invention, the curved composite part having an outer flange, an inner flange, and a web, comprises a composite stack of layers including overlapping layer segments in the outer flange and/or the web and/or the inner flange. Thus, the overlapping layer segments may be located in any area of the curved composite part of the invention.

Preferably, the curved composite part comprises a composite stack of layers, wherein each of these layers is formed by unidirectional fibers substantially aligned with one and a same direction of the Cartesian coordinate reference system. The use of unidirectional layers reduces the weight in the part because the better strength properties of the material allow the reduction of the global thickness of the part.

Alternatively, the curved composite part comprises a composite stack of layers, wherein each of these layers comprises fabric material including fibers substantially aligned with at least one direction of the Cartesian coordinate reference system.

Another aspect of the invention refers to a method for manufacturing a curved composite part for an aircraft, comprising the steps of carrying out a substantially flat layup of fiber reinforced layers using a same (unique) Cartesian coordinate reference system, including orienting the reinforcing fibers of each layer along to at least one direction of the Cartesian coordinate reference system; forming the layup to obtain a curved part pre-form including a web, an inner flange, and an outer flange; and curing said curved part pre-form to obtain a cured curved composite part.

The invention provides a manufacturing process for curved composite parts that reduces the lead time, labor, and cost in comparison to the manufacture of conventional curved composite parts, due to the use of only one Cartesian coordinate reference system for the entire part.

Also, in contrast to conventional curved composite parts, the invention avoids continuously adapting the laminate to the local Cartesian reference system, simplifying both lay-up and forming tasks.

The method of the invention provides a new fibre laminate configuration for a fully automated process based on a full stack laminate, with its consequent improvement in quality, robustness, cost, and weight.

In addition, the curved composite part obtained with the invention is independent of the radius of curvature. Therefore, parts with small radius of curvature can be produced, such as radius of curvature of 300 mm - 500 mm or even lower.

According to a preferred embodiment of the invention, the manufacturing method further comprises the steps of cutting those layers that comprises at least one unidirectional reinforcing fiber which orientation is secant to the bending line of the inner flange of the part, obtaining a layer segment; and disposing another layer overlapping the previously obtained layer segment and thus obtaining an overlapping layer segment, including orienting the reinforcing fibers of this another layer along to the same at least one direction of the Cartesian coordinate reference system with which the fibers of the previously obtained layer segment have been oriented.

These cuts and overlaps provide extra material that permits stretching layers without suffering fibre distortions, thus simplifying forming tasks (specially for small radius) and improving the quality of the obtained curved composite parts. Further, the method provides fibres orientated in all required directions, in combination with local or global reinforcements if required for weight optimization.

Further, according to a preferred embodiment of the invention, the forming step preferably includes bending the edges of the layup using a press tool, to thus obtain an integrally formed curved part pre-form having inner and outer flanges substantially transverse to the web.

The press tool allows the full stack laminate to be preformed in a one-shot forming process, enabling obtaining small radius of curvature, such as radius of 300 mm - 500 mm or even lower.

The manufacturing process is applicable to any structural parts of an aircraft, such as frames, beams, spars, ribs, etc.

The method of the invention is compatible with the conventional manufacture of composites, sharing manufacturing conditions, trimming process and final assembly line. Further, the method of the invention is compatible with any composite material.

### Brief description of the drawings

For a better comprehension of the invention, the following drawings are provided for illustrative and non-limiting purposes, wherein:
Figure 1 shows conventional curved composite parts formed by layers each of them made up of fibers aligned with local Cartesian coordinate reference systems.
Figure 2 shows curved composite parts formed by layers each of them made up of fibers aligned with a unique Cartesian coordinate reference system according to the invention.
Figures 3a-3d show consecutive steps of the first phase of the method for the manufacturing of a curved composite part according to a preferred embodiment of the invention.
Figures 4a-4d show the corresponding cross-sectional views of the stack of layers formed according to the steps of Figure 3.
Figures 5a-5d show consecutive steps of the first phase of the method for the manufacturing of a curved composite part according to another preferred embodiment of the invention.
Figures 6a-6d show the corresponding cross-sectional views of the stack of layers formed according to the steps of Figure 5.
Figures 7a-7b show different views of a curved composite part in which exemplary fibers are depicted. Drawing (A) shows a schematic top view, and drawing (B) a schematic perspective view.
Figure 8 shows an exemplary layup of a curved composite part comprising overlapping layer segments in the inner flange, according to another preferred embodiment of the invention.
Figures 9a-9c show different views of the layup forming step, in which the inner edge of the layup is bended to obtain the inner flange of the curved composite part, according to another preferred embodiment of the invention. Drawing (A) shows a perspective view of the inner edge of the layup before bended, drawing (B) the inner flange formed according to a preferred embodiment of the present invention, and drawing (C) the inner flange formed according to another preferred embodiment the present invention.
Figures 10a-10c show different steps of the forming in which the edges of the layup are bended using a press tool, to obtain an integrally formed curved part pre-form having inner and outer flanges substantially transverse to a web.

### Preferred embodiments of the invention

Figure 2 shows a curved composite part (1) for an aircraft, according to a preferred embodiment of the invention. As seen, the curved composite part (1) has an outer flange (3), an inner flange (5), and a connecting transversal web (4).

According to the invention, the curved composite part (1) comprises a composite stack of layers (6), each of the layers (6', 6", 6"', 6"") including reinforcing fibers (7) substantially aligned with at least one direction of a same (unique) Cartesian coordinate reference system (2).

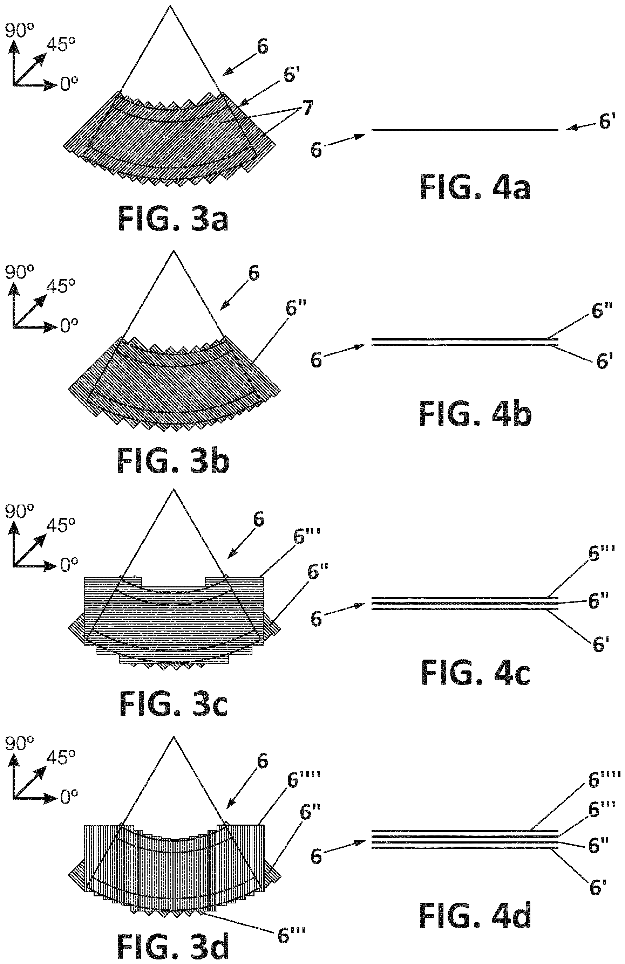

Figures 3a-3d show the step of carrying out one composite stack of layers (6) integrated by layers (6', 6", 6"', 6"") formed by unidirectional fibers (7), substantially aligned with one and a same direction of the Cartesian coordinate reference system (2). Figure 3a shows a first step, in which a first layer (6') including unidirectional fibers (7) aligned with a +45° direction of the Cartesian coordinate reference system (2), is initially deposited. Figure 3b shows a further stage of the carrying out step, in which a second layer (6") with -45° fibers (7) is deposited over the first layer (6'), completely covering said first layer (6'). Figure 3c shows a further step, in which a third layer (6"') with 0° fibers (7) is deposited over the second layer (6"), completely covering said second layer (6"). Figure 3d shows a further step, in which a fourth layer (6"") with 90° fibers (7) is deposited over the third layer (6"'), completely covering said third layer (6"'). This way, a laminate with fibers at +45°, -45°, 0°, +90° are formed according to the invention.

Figures 4a-4d show the cross-sectional views of the stack of layers (6) formed according to the steps of Figure 3.

As shown in Figures 3 and 4, the curved composite part (1) is performed using a unique global Cartesian coordinate reference system (2) for the whole part. This simplifies the layup process and reduces the labour time, since no multiple local reference systems have to be used for the part. Thus, no steering is needed.

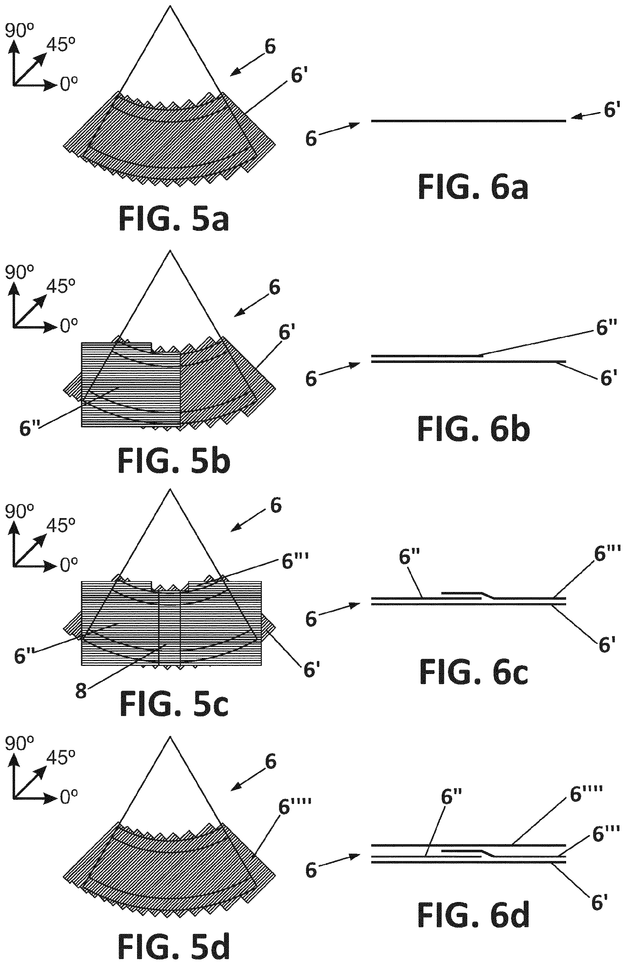

Figures 5a-5d show the step of carrying out one composite stack of layers (6) comprising overlapping layer segments (8). Figure 5a shows a first step, in which a first layer (6'), including fibers (7) aligned with a +45° direction of the Cartesian coordinate reference system (2), is initially deposited. Figure 3b shows a further stage of the carrying out step, in which a second layer (6") with 0° fibers (7) is deposited and cut, turning into a layer segment which partially covers the first layer (6'). Figure 3c shows a further step, in which a third layer (6"') with 0° fibers (7) is deposited overlapping the previous layer segment, obtaining an overlapping layer segment (8), and covering at least part of both the first (6') and second layers (6"). Figure 3d shows a further step, in which an entire fourth layer (6"") with 45° fibers (7) is deposited covering both the second (6") and third layers (6"').

Figures 6a-6d show the cross-sectional views of the stack of layers (6) formed according to the steps of Figure 5.

As mentioned, these overlaps provide extra material that permits stretching layers without suffering fibre distortions. Forming tasks are thus simplified, specially for parts having small radius, and the manufacturability and quality of the parts are improved.

Figures 3-4 and 5-6 show different composite stacks of layers (6) integrated by unidirectional fibers (7) substantially aligned with one and a same direction of the Cartesian coordinate reference system (2). However, forming the stack (6) with layers (6', 6", 6"', 6"") of fabric is also possible. In the last case, fibers (7) are substantially aligned more than one direction of the same Cartesian coordinate reference system (2).

According to a preferred embodiment of the invention, the layers (6', 6", 6"', 6"") whose orientation is secant to the bending line of the inner flange (5) of the part (1) are integrated forming overlapping layer segments (8).

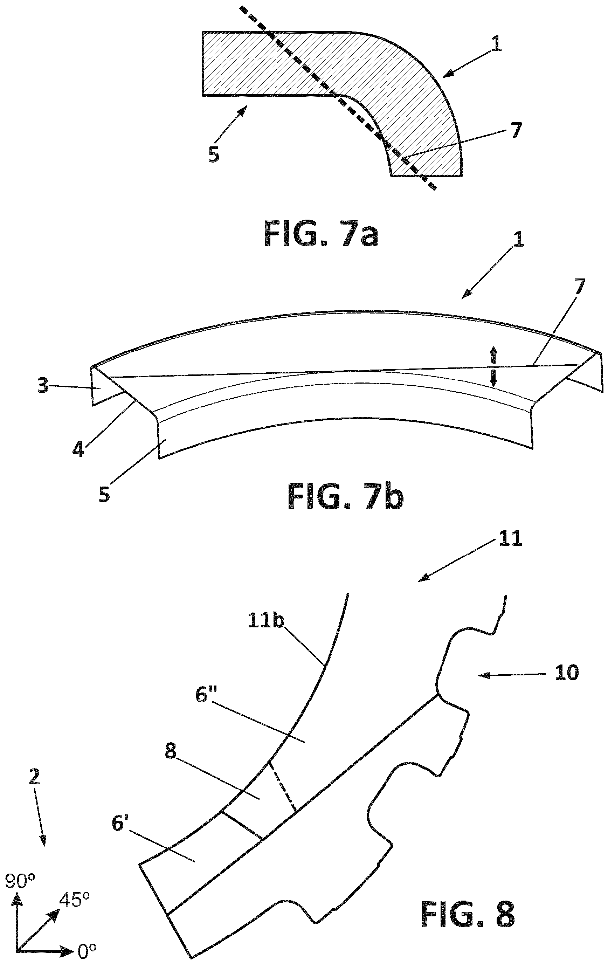

Figure 7a and 7b shows different fibers (7) of a part (1). Figure 7a shows a fibre (7) secant to the bending line of the inner flange (5) of a part (1). Figure 7b shows a dividing fibre (7) from which fibres (7) of the part (1) are divided on secant and no-secant fibres. Thus, fibres (7) placed toward the inner flange (5) are secant fibres, and fibres (7) placed toward the outer flange (3) are no-secant. Secant fibres will be cut and overlap to form overlapping layer segments (8), as showed in Figure 6, while no-secant fibres will be continuous fibres (will not be cut and overlap).

Figure 8 shows the substantially flat lay-up (11) of a curved composite part (1). The layup (11) is formed by several stack of layers (6), where each of the layers (6', 6", 6"', 6"") uses the same Cartesian coordinate reference system (2).

Figure 8 shows two exemplary layers (6', 6") including fibers (7) whose orientation is secant to the bending line of the forthcoming inner flange (5), wherein said layers (6', 6") are disposed forming overlapping layer segments (8).

The fibers (7) of each overlapping layer segment (8) are aligned with the same at least one direction of the Cartesian coordinate reference system (2) with which the rest of the fibers (7) of the previously formed layer (6', 6", 6"', 6"") have been aligned. This way, the invention maintains the resistant properties of the part (1), at the same time that provides extra material on the inner edge (11 b) of the layup (11), to permit stretching the layers without suffering fibre distortions when the inner flange is folded.

Preferably, the overlapping layer segments (8) have polygonal shape, and are longitudinally extended along the part (1), over the web (4) and beyond the inner flange (5).

Further, as shown in Figure 8 and according to another preferred embodiment, the web and the outer edge of the layup (11) has a plurality of mouse-hole cutouts (10) to permit the stringers to pass through in case the part is a frame section.

According to another preferred embodiment, the overlapping layer segment (8) is shaped so as to provide the same cross-sectional overlapping area along the entire part (1) when the layup (11) is formed.

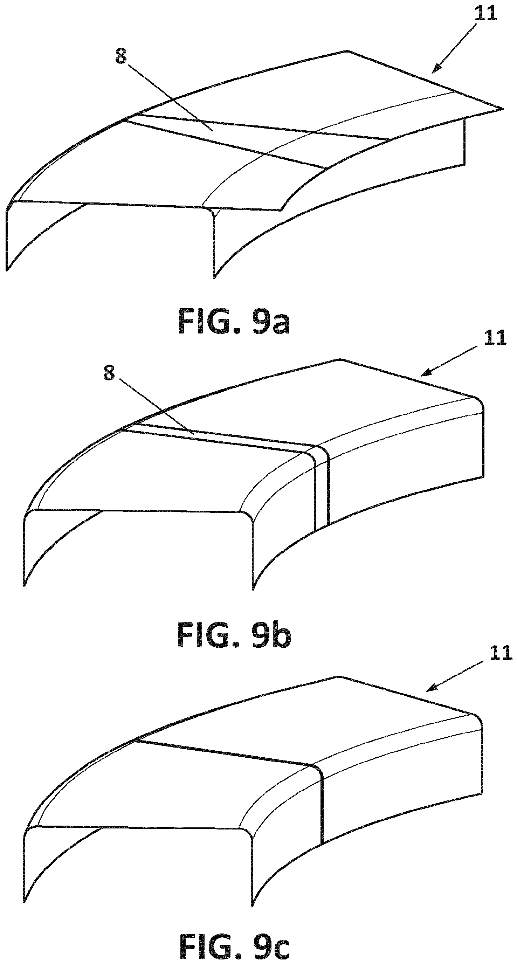

Figure 9 shows the layup (11) bending to obtain the inner flange (5) of the curved composite part (1). As shown, the shape of the overlapping layer segment (8) varies when the layup (11) is formed. In the showed cases, an initial trapezoidal shape (Figure 9a) may turn into a rectangular shape (Figure 9b) or into a butt joint (Figure 9c) when the layup (11) is formed.

Thus, according to a preferred embodiment, the overlapping layer segment (8) is shaped so as having a rectangular shape when the layup (11) is formed. In this case, the curved composite part (1) is provided with a laminate configuration that ensures a correct transfer of loads in the areas of the part in which there are overlapping segments.

Alternatively, according to another preferred embodiment, the overlapping layer segment (8) is shaped so as to provide a butt joint between the layers (6', 6") forming the overlapping layer segment (8).

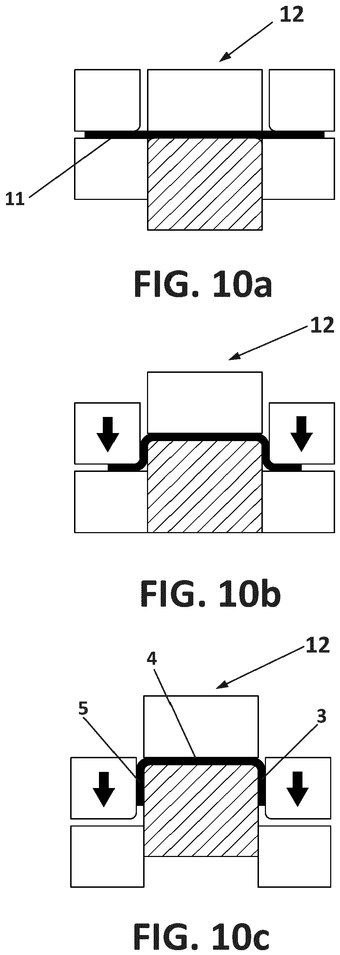

Figures 10a-10c show different steps of the layup forming in which the edges of said layup (11) are bended by the use of a press tool (12), to obtain an integrally formed curved part pre-form having inner (5) and outer flanges (3) substantially transverse to a web (4).

The press tool (12) enables that a one-shot forming process can be achieved, above all, for parts with small radius of curvature (300 mm - 500 mm).

After the forming, the curved part pre-form is cured to obtain a cured curved composite part (1).

## Claims

1. A curved composite part (1) for an aircraft, comprising a composite stack of layers (6), each of the layers (6', 6", 6"', 6"") including reinforcing fibers (7) substantially aligned with at least one direction of a same Cartesian coordinate reference system (2).

2. A curved composite part (1) for an aircraft, according to claim 1, having an outer flange (3), an inner flange (5), and a web (4), wherein the part (1) comprises layers (6', 6", 6"', 6"") including fibers (7) whose orientation is secant to the bending line of the inner flange (5), and wherein said layers (6', 6", 6"', 6"") are conformed by overlapping layer segments (8).

3. A curved composite part (1) for an aircraft, according to claim 2, wherein each overlapping layer segment (8) comprise fibers (7) aligned with the same at least one direction of the Cartesian coordinate reference system (2) with which the rest of the fibers (7) of the previously formed layer (6', 6", 6"', 6"") have been substantially aligned.

4. A curved composite part (1) for an aircraft, according to any of claims 2-3, wherein the overlapping layer segments (8) have polygonal shaped, and are longitudinally extended along the part (1), over the web (4) and beyond the inner flange (5).

5. A curved composite part (1) for an aircraft, according to any of the preceding claims, wherein each layer (6', 6", 6"', 6"") is formed by unidirectional fibers (7) substantially aligned with one and a same direction of the Cartesian coordinate reference system (2).

6. A curved composite part (1) for an aircraft, according to any of claims 1-4, wherein each layer (6', 6", 6"', 6"") comprises fabric material including fibers (7) substantially aligned with the at least one direction of the Cartesian coordinate reference system (2).

7. A curved composite part (1) for an aircraft, according to any of claims 2-6, wherein said part (1) has a C-shaped cross section, a Z-shaped cross section, or a H-shaped cross section, and wherein the outer (3) and the inner flanges (5) are integrally formed with the web (4).

8. A curved composite part (1) for an aircraft, according to any of the preceding claims, wherein the reinforcing fibers (7) of the layers (6', 6", 6"', 6"") are oriented following one and the same subsequent angles +45°, -45°, 0°, +90° with respect to the XY axes of the Cartesian coordinate reference system (2).

9. A curved composite part (1) for an aircraft, according to any of claims 1-7, wherein the reinforcing fibers (7) of the layers (6', 6", 6"', 6"") are oriented following one and the same subsequent angles +30°, -30°, 0°, +90° with respect to the XY axes of the Cartesian coordinate reference system (2).

10. Method for manufacturing a curved composite part (1) for an aircraft, comprising the steps of:
- carrying out a substantially flat layup (11) of fiber reinforced layers (6', 6", 6"', 6"") using a same Cartesian coordinate reference system (2), including orienting the reinforcing fibers (7) of each layer (6', 6", 6"', 6"") along to at least one direction of the Cartesian coordinate reference system (2),
- forming the layup (11) to obtain a curved part pre-form including a web (4), an inner flange (5) and an outer flange (3), and
- curing said curved part pre-form to obtain a cured curved composite part (1).

11. Method for manufacturing a curved composite part (1) for an aircraft, according to claim 10, further comprising the steps of:
- cutting each of those layers (6', 6", 6"', 6"") that comprises at least one reinforcing fiber (7) which orientation is secant to the bending line of the inner flange (5) of the part (1), obtaining a layer segment,
- disposing another layer (6', 6", 6"', 6"") overlapping the previously obtained layer segment and thus obtaining an overlapping layer segment (8), including orienting the reinforcing fibers (7) of this another layer (6', 6", 6"', 6"") along to the same at least one direction of the Cartesian coordinate reference system (2) with which the fibers (7) of the previously obtained layer segment have been oriented.

12. Method for manufacturing a curved composite part (1) for an aircraft, according to any of claims 10-11, wherein forming the layup (11) includes bending the edges of the layup (1) using a press tool (12), to obtain an integrally formed curved part pre-form having inner (5) and outer flanges (3) substantially transverse to the web (4).

13. Method for manufacturing a curved composite part (1) for an aircraft, according to 12, wherein the press tool (12) is shaped such that a curved part pre-form having a C-shaped cross section, or a Z-shaped cross section, or a H-shaped cross section is obtained.

14. Method for manufacturing a curved composite part (1) for an aircraft, according to any of claims 10-13, wherein orienting the reinforcing fibers (7) is performed using a computer controlled automatic fiber placement machine.

15. Method for manufacturing a curved composite part (1) for an aircraft, according to any of claims 10-14, wherein the overlapping layer segment (8) is shaped so as to provide the same cross-sectional overlapping area along the part (1) when the layup (11) is formed or to at least provide a butt joint between the layers (6', 6") forming the overlapping layer segment (8).
